# EUROPEAN PATENT APPLICATION

(11) **EP 3 792 148 A1**
(43) Date of publication of application: **17.03.2021**
(21) Application number: 19197559.8
(22) Date of filing: 16.09.2019
(51) Int. Cl.: B62D 5/00

(54) **STEER-BY-WIRE CONTROL SYSTEM, VEHICLE COMPRISING A STEER-BY-WIRE CONTROL SYSTEM, AND METHOD FOR CONTROLLING A STEER-BY-WIRE CONTROL SYSTEM**

(71) Applicant: Ningbo Geely Automobile Research & Development Co., Ltd., Ningbo, Zhejiang 315336 (CN)
(72) Inventor: APPELQVIST, Lars, 439 31 ONSALA (SE)
(74) Representative: Zacco Sweden AB

(57) **Abstract**

A steer-by-wire control system (1) for vehicles configured for controlling the steering angles of a first wheel (2a) and a second wheel (2b); wherein the system (1) comprises a first actuator unit (3a), a second actuator unit (3b), and a control unit (4) arranged for controlling the first actuator unit (3a) and the second actuator unit (3b); wherein the control unit (4) is arranged for detecting operational modes of the first actuator unit (3a) and the second actuator unit (3b), wherein the first actuator unit (3a) is arranged for controlling the steering position of the first wheel (2a) in a decoupled operational mode (M_{DO} ) independently of the second wheel (2b), and wherein the second actuator unit (3b) is arranged for controlling the steering position of the second wheel (2b) in the decoupled operational mode (M_{DO} ) independently of the first wheel (2a), wherein in a first fault operational mode (M_{F1} ) where a malfunction of the first actuator unit (3a) is detected by the control unit (4), the second actuator unit (3b) is arranged for controlling the steering position of the first wheel (2a) and the second wheel (2b); or in a second fault operational mode (M_{F2} ) where a malfunction of the second actuator unit (3b) is detected by the control unit (4), the first actuator unit (3a) is arranged for controlling the steering position of the first wheel (2a) and the second wheel (2b).

## Description

### TECHNICAL FIELD

The present disclosure relates to a steer-by-wire control system for vehicles, configured for controlling the steering angles of a first wheel and a second wheel. The system comprises a first actuator unit, a second actuator unit, and a control unit arranged for controlling the first actuator unit and the second actuator unit. The control unit is arranged for detecting operational modes of the first actuator unit and the second actuator unit. The disclosure further relates to a vehicle comprising a steer-by-wire control system, and a method for controlling a steer-by-wire control system.

### BACKGROUND

Today's vehicles comprise control systems for controlling different functions and systems of the vehicles. The control systems are integrated in the vehicle systems and are important to ensure a high level of safety and reliability of the vehicle construction.

The increasing focus on autonomous drive vehicles or self-driving vehicles, where the vehicle is capable of sensing its environment and drive with little or no input from a driver, is demanding new control systems. Autonomous vehicle functions will require the control of the vehicle without the need of the driver to control the vehicle. The development of autonomous drive vehicle will lead to removal of the mechanical connection to the driver, such as for example steering wheel and pedals, and full steer-by-wire functionality will be developed.

To ensure the safety and reliability of full steer-by-wire vehicle systems, critical components and systems need to be duplicated, such as for example the actuating functions of the steer-by-wire control system of the vehicle, with so-called redundancy functions.

In modern vehicle steer-by-wire constructions, the steering control system may be designed with separate actuators for each wheel to be controlled, where the actuators are configured for controlling the steering angles of the wheels. Some vehicle designs are allowing the driver to take control of the vehicle when there is a malfunction of the steering system. However, autonomous drive with fully autonomous vehicles according to Level 5, where the vehicle is not requiring any help from a driver to operate the vehicle, puts new demands on the steering redundancy systems without any interaction from the driver or other occupants of the vehicle. There is thus a need for improved steering redundancy systems for steer-by-wire vehicles.

### SUMMARY

An object of the present disclosure is to provide a steer-by-wire control system, a vehicle comprising a steer-by-wire control system, and a method for controlling a steer-by-wire control system, where the previously mentioned problems are avoided. This object is at least partly achieved by the features of the independent claims. The dependent claims contain further developments of the steer-by-wire control system and the method for controlling a steer-by-wire control system.

The disclosure concerns a steer-by-wire control system for vehicles, where the system is configured for controlling the steering angles of a first wheel and a second wheel. The system comprises a first actuator unit, a second actuator unit, and a control unit arranged for controlling the first actuator unit and the second actuator unit. The control unit is arranged for detecting operational modes of the first actuator unit and the second actuator unit. The first actuator unit is arranged for controlling the steering position of the first wheel in a decoupled operational mode independently of the second wheel. The second actuator unit is arranged for controlling the steering position of the second wheel in the decoupled operational mode independently of the first wheel. In a first fault operational mode where a malfunction of the first actuator unit is detected by the control unit, the second actuator unit is arranged for controlling the steering position of the first wheel and the second wheel; or in a second fault operational mode where a malfunction of the second actuator unit is detected by the control unit, the first actuator unit is arranged for controlling the steering position of the first wheel and the second wheel.

Advantages with these features are that with the steer-by-wire control system according to the disclosure, the vehicle can be controlled without the need for a driver to control the vehicle if a malfunction occurs on one of the actuator units of the system. Autonomous vehicle development will lead to removal of the mechanical connection to the driver, for example removing the steering wheel or other steering controls, and instead full steer-by-wire functionality can be implemented with the steer-by-wire control system through the established redundancy functionality. Further, the steer-by-wire control system comprises separate actuators for each wheel to be controlled, where the actuators are configured for controlling the steering angles of the wheels providing accurate and precise control of the steering functionality. The more precise control of the steering may lead to decreased tire wear, fuel consumption and wheel friction. Optimal steering angles of each wheel can be obtained for different steering positions and driving conditions when the first actuator unit and the second actuator unit are allowed to work independently from each other. Further, the steer-by-wire control system may be used to improve vehicle dynamics, such as for example rotations or side movements if applied in a four-wheel steering configuration.

According to an aspect of the disclosure, the system further comprises a first steering linkage and a second steering linkage. The first actuator unit is connected to the first steering linkage and the second actuator unit is connected to the second steering linkage. The first steering linkage is arranged for changing the steering position of the first wheel and the second steering linkage is arranged for changing the steering position of the second wheel. In the decoupled operational mode, the first steering linkage is decoupled from the second steering linkage. Optimal steering angles of each wheel can be obtained with the connection of the actuator units to the respective steering linkages when the first steering linkage is decoupled from the second steering linkage. The wheels are controlled independently from each other for different steering positions and driving conditions through the configuration with the actuator units and steering linkages.

According to another aspect of the disclosure, the system further comprises a linkage connecting unit arranged for connecting the first steering linkage and second steering linkage. In the decoupled operational mode, the linkage connecting unit is disconnected from the first steering linkage and/or the second steering linkage. In the first fault operational mode or the second fault operational mode the linkage connecting unit is connected to the first steering linkage and the second steering linkage. The linkage connection unit is in the decoupled operational mode allowing the actuator units to work independently from each other, and in the fault operational modes allowing the non-malfunctioning actuator unit to control the steering of both wheels.

According to an aspect of the disclosure, the linkage connecting unit comprises a first connection member and a second connection member. In the first fault operational mode or the second fault operational mode, the first connection member is connecting the linkage connection unit to the first steering linkage and the second connection member is connecting the linkage connection unit to the second steering linkage. The first and second connection members are providing an efficient connection between the first steering linkage and the second steering linkage for a safe steering control functionality in the fault operational modes.

According to another aspect of the disclosure, the linkage connecting unit further comprises a linkage rod. The first connection member and the second connection member are attached to the linkage rod. The linkage rod is providing an efficient connection between the first steering linkage and the second steering linkage for a safe steering control functionality in the fault operational modes.

According to a further aspect of the disclosure, the first actuator unit comprises a first power electronic driver and a first electric motor, and the second actuator unit comprises a second power electronic driver and a second electric motor. The first electric motor is coupled to the first steering linkage and the second electric motor is coupled to the second steering linkage. The power electronic drivers and the electric motors are providing efficient, reliable, and compact steering functionality of the steer-by-wire control system.

According to an aspect of the disclosure, the first power electronic driver is connected to the control unit and the second power electronic driver is connected to the control unit. The first electric motor is in electric communication with the first electronic power driver to receive power therefrom and the second electric motor is in electric communication with the second electronic power driver to receive power therefrom.

According to another aspect of the disclosure, the system further comprises a hydraulic pump. The first actuator unit comprises a first hydraulic actuator and a first hydraulic circuit. The second actuator unit comprises a second hydraulic actuator and a second hydraulic circuit. The first hydraulic circuit is connecting the hydraulic pump to the first hydraulic actuator and the second hydraulic circuit is connecting the hydraulic pump to the second hydraulic actuator.

According to a further aspect of the disclosure, the linkage connecting unit is a hydraulic connection unit. The hydraulic connection unit is providing an alternative solution for controlling the steer-by-wire control system.

The disclosure further concerns a vehicle comprising a steer-by-wire control system as described above.

The disclosure further concerns a method for controlling a steer-by-wire control system for vehicles, where the system is configured for controlling the steering angles of a first wheel and a second wheel. The system comprises a first actuator unit, a second actuator unit, and a control unit controlling the first actuator unit and the second actuator unit. The control unit is arranged for detecting operational modes of the first actuator unit and the second actuator unit. The method comprises the steps; controlling the steering position of the first wheel with the first actuator unit in a decoupled operational mode independently of the second wheel, and controlling the steering position of the second wheel with the second actuator unit in the decoupled operational mode independently of the first wheel; controlling the steering position of the first wheel and the second wheel with the second actuator unit in a first fault operational mode, where in the first fault operational mode a malfunction of the first actuator unit is detected by the control unit; or controlling the steering position of the first wheel and the second wheel with the first actuator unit in a second fault operational mode, where in the second fault operational mode a malfunction of the second actuator unit is detected by the control unit.

Advantages with these features are that with the method for controlling a steer-by-wire control system for vehicles, the vehicle can be controlled without the need for a driver to control the vehicle if a malfunction occurs on one of the actuator units of the system. Further, the method is providing an accurate and precise control of the steering functionality, since the steer-by-wire control system comprises separate actuators for each wheel to be controlled. The actuators are configured for controlling the steering angles of the wheels, and the more precise control of the steering may lead to decreased tire wear, fuel consumption and wheel friction. Optimal steering angles of each wheel can be obtained for different steering positions and driving conditions when the first actuator unit and the second actuator unit are allowed to work independently from each other. The steering angles may with the steer-by-wire control system be continuously optimized for different driving conditions in the decoupled operational mode, and they may for example vary depending on the speed of the vehicle. In this way, the steering angles may in the decoupled operational mode be adjusted for a specific speed or driving condition, and optimized to that specific condition if a malfunction of one of the actuator unit occurs and the other actuator unit is controlling the steering positions of both wheels in one of the fault operational modes.

According to an aspect of the disclosure, the system comprises a first steering linkage and a second steering linkage. The first actuator unit is connected to a first steering linkage and the second actuator unit is connected to a second steering linkage. In the decoupled operational mode, the first steering linkage is decoupled from the second steering linkage. The method further comprises the steps; changing the steering position of the first wheel with the first steering linkage and changing the steering position of the second wheel with the second steering linkage. Optimal steering angles of each wheel can be obtained with the connection of the actuator units to the respective steering linkages, where the wheels are controlled independently from each other for different steering positions and driving conditions through the configuration with the actuator units and steering linkages.

According to another aspect of the disclosure, the method further comprises the step; controlling the first steering linkage and the second steering linkage independently from each other in the decoupled operational mode. Optimal steering angles of each wheel can be obtained for different steering positions and driving conditions when the first actuator unit and the second actuator unit are controlled independently of each other.

According to a further aspect of the disclosure, the system comprises a linkage connecting unit. The method further comprises the steps; disconnecting the linkage connecting unit from the first steering linkage and/or the second steering linkage in the decoupled operational mode; connecting the linkage connecting unit to the first steering linkage and the second steering linkage in the first fault operational mode or the second fault operational mode. The linkage connection unit is in the decoupled operational mode allowing the actuator units to work independently from each other, and in the fault operational modes allowing the non-malfunctioning actuator unit to control the steering of both wheels.

### BRIEF DESCRIPTION OF DRAWINGS

The disclosure will be described in detail in the following, with reference to the attached drawings, in which
- Fig. 1a-c: show schematically, different modes of a steer-by-wire control system according to the disclosure,
- Fig. 2: shows schematically, actuator units of the steer-by-wire control system of a first embodiment according to the disclosure, and
- Fig. 3: shows schematically, actuator units of the steer-by-wire control system of a second embodiment according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

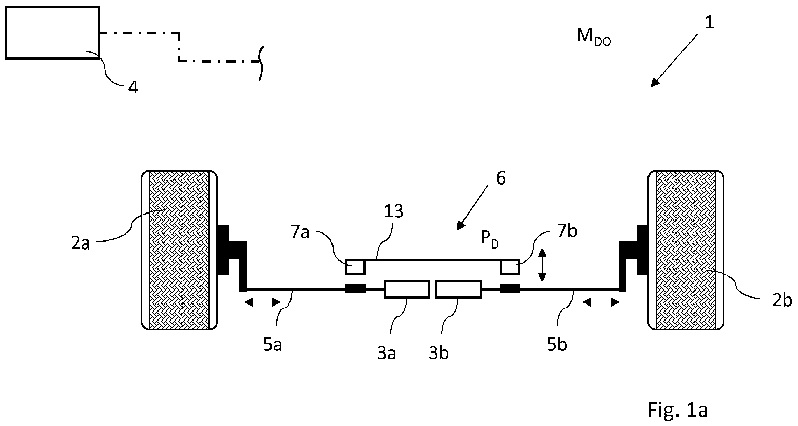

Figure 1a schematically shows a steer-by-wire control system 1 for vehicles, where the system is configured for controlling the steering angles of a first wheel 2a and a second wheel 2b of the vehicle. The system 1 comprises a first actuator unit 3a, a second actuator unit 3b, and a control unit 4. The control unit 4 is arranged for controlling the first actuator unit 3a and the second actuator unit 3b. The control unit 4 is connected to the first actuator unit 3a and the second actuator unit 3b with suitable connection means. The control unit 4 is controlling the steering angle of the first wheel 2a via the first actuator unit 3a, and the steering angle of the second wheel 2b via the second actuator unit 3b. The system may comprise two or more connected control units if suitable.

As illustrated in figure 1a, the steer-by-wire control system 1 further comprises a first steering linkage 5a and a second steering linkage 5b. The first actuator unit 3a is connected to the first steering linkage 5a, and the second actuator unit 3b is connected to the second steering linkage 5b. The first steering linkage 5a is connected to the first wheel 2a, and the first steering linkage 5a is arranged for changing the steering position of the first wheel 2a. The first actuator 3a is primarily arranged for changing the position of the first steering linkage 5a during normal driving conditions, and when changing the position of the first steering linkage 5a, as illustrated with a double arrow in connection to the first steering linkage 5a in figure 1a, the steering position, such as for example the steering angle, of the first wheel 2a is changed. The second steering linkage 5b is connected to the second wheel 2b, and the second steering linkage 5b is arranged for changing the steering position of the second wheel 2b. The second actuator 3b is primarily arranged for changing the position of the second steering linkage 5b during normal driving conditions, and when changing the position of the second steering linkage 5b, as illustrated with a double arrow in connection to the second steering linkage 5b in figure 1a, the steering position, such as for example the steering angle, of the second wheel 2b is changed.

It should be understood that the first steering linkage 5a and the second steering linkage 5b are only schematically illustrated in the figures, and the respective steering linkages may comprise different interacting components for establishing the steering functionality for changing the steering positions of the respective wheels.

The control unit 4 is further arranged for detecting operational modes of the first actuator unit 3a and the second actuator unit 3b. The respective actuator units may comprise sensors or other means for detecting the operational modes and malfunctioning components. In a decoupled operational mode M_{DO}, the steer-by-wire control system 1 of the vehicle is operating without any disturbances during normal operational conditions. The decoupled operational mode M_{DO} is schematically illustrated in figure 1a. In the decoupled operational mode M_{DO}, the first actuator unit 3a is arranged for controlling the steering position of the first wheel 2a independently of the second wheel 2b, and the second actuator unit 3b is arranged for controlling the steering position of the second wheel 2b independently of the first wheel 2a. Thus, in the decoupled operational mode M_{DO} the first steering linkage 5a is fully decoupled from the second steering linkage 5b, and the system 1 is configured in a decoupled position P_{D}. The decoupling of the steering linkages from each other in the decoupled position P_{D} is providing an optimal steering functionality of the vehicle. Optimal steering angles of each wheel can be obtained for different steering positions and driving conditions when the first actuator unit 3a and the second actuator unit 3b are allowed to work independently from each other. Through the arrangement of the first actuator unit 3a and the second actuator unit 3b working in the decoupled position P_{D} in the decoupled operational mode M_{DO}, the steer-by-wire control system 1 is providing an optimal driving performance mode for the vehicle.

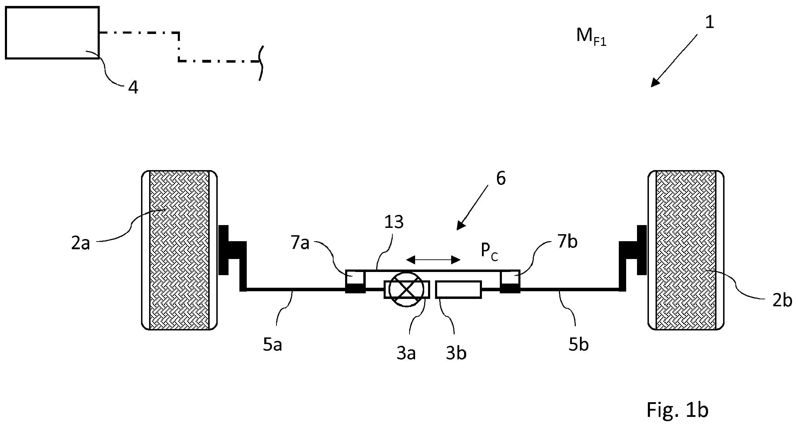

In a first fault operational mode M_{F1}, a malfunction of the first actuator unit 3a has been detected by the control unit 4. A malfunction of the first actuator unit 3a may be any type of disturbance or disruption in the functionality of the first actuator 3a, which is affecting the ability of the first actuator 3a to provide a normal actuation function on the first steering linkage 5a for controlling the steering position of the first wheel 2a. In the first fault operational mode M_{F1}, the control unit 4 of the steer-by-wire control system 1 thus has detected a malfunction of the first actuator unit 3a, which may influence the steering operation of the vehicle. The first fault operational mode M_{F1} is schematically illustrated in figure 1b.

In the first fault operational mode M_{F1}, where the malfunction of the first actuator unit 3a is detected by the control unit 4, the second actuator unit 3b is arranged for controlling the steering position of the first wheel 2a and the second wheel 2b. Thus, when the malfunction of the first actuator 3a is detected by the control unit 4 the system is configured in a mode where the second actuator 3b is controlling the steering position of both the first wheel 2a and the second wheel 2b. In the first fault operational mode M_{F1}, according to the disclosure, the first steering linkage 5a is coupled to the second steering linkage 5b, and the system 1 is configured in a coupled position Pc to achieve the desired functionality of the system 1, as will be further described below. The coupling of the steering linkages to each other in the coupled position Pc is providing a safe steering functionality of the vehicle. Suitable steering angles of the wheels can be obtained for different steering positions and driving conditions when the second actuator unit 3b is used for controlling the steering positions of both wheels. Through the arrangement of the first steering linkage 5a and the second steering linkage 5b working in the coupled position Pc in the first fault operational mode M_{F1}, the steer-by-wire control system 1 is providing an safe driving mode for the vehicle. In the first fault operational mode M_{F1}, the first actuator unit 3a may be fully deactivated and configured not to impact the steering functionality of the vehicle. It should be understood that the system may depending on the driving condition be configured in a coupled position even if a malfunction of one of the actuator units is not detected, such as for example at high speeds.

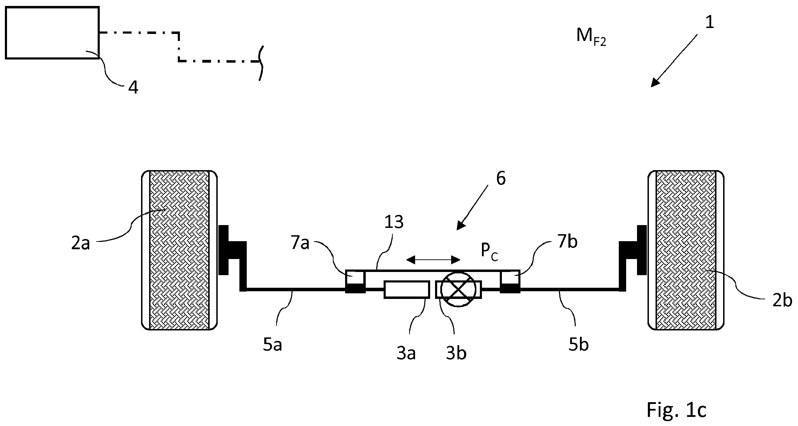

In a second fault operational mode M_{F2}, a malfunction of the second actuator unit 3b has been detected by the control unit 4. A malfunction of the second actuator unit 3b may be any type of disturbance or disruption in the functionality of the second actuator 3b, which is affecting the ability of the second actuator 3b to provide a normal actuation function on the second steering linkage 5b for controlling the steering position of the second wheel 2b. In the second fault operational mode M_{F2}, the control unit 4 of the steer-by-wire control system 1 thus has detected a malfunction of the second actuator unit 3b, which may influence the steering operation of the vehicle. The second fault operational mode M_{F2} is schematically illustrated in figure 1c.

In the second fault operational mode M_{F2}, where the malfunction of the second actuator unit 3b is detected by the control unit 4, the first actuator unit 3a is arranged for controlling the steering position of the first wheel 2a and the second wheel 2b. Thus, when the malfunction of the second actuator 3b is detected by the control unit 4 the system is configured in a mode where the first actuator 3a is controlling the steering position of both the first wheel 2a and the second wheel 2b. In the second fault operational mode M_{F2}, according to the disclosure, the second steering linkage 5b is coupled to the first steering linkage 5a, and the system 1 is configured in a coupled position Pc to achieve the desired functionality of the system 1, as will be further described below. The coupling of the steering linkages to each other in the coupled position Pc is providing a safe steering functionality of the vehicle. Suitable steering angles of the wheels can be obtained for different steering positions and driving conditions when the first actuator unit 3a is used for controlling the steering positions of both wheels. Through the arrangement of the second steering linkage 5b and the first steering linkage 5a working in the coupled position Pc in the second fault operational mode M_{F2}, the steer-by-wire control system 1 is providing a safe driving mode for the vehicle. In the second fault operational mode M_{F2}, the second actuator unit 3b may be fully deactivated and configured not to impact the steering functionality of the vehicle.

In the first fault operational mode M_{F1} and the second fault operational mode M_{F2}, the malfunctioning actuator is according to the disclosure disconnected from the system and both wheels are controlled by the same fault-free actuator. Thus, the steer-by-wire control system 1, in the respective fault operational modes, enables coupled steering functionalities with the actuator unit on one side in case of failure of the actuator unit on the other side. The steer-by-wire control system 1 is when a malfunction or failure of one of the actuator units occurs transitioning to a degraded coupled steering mode based on control from the actuator unit on the fault-free side. The system is when an actuator unit malfunction occurs transitioning from the decoupled operational mode M_{DO} to one of the fault operational modes, based on malfunction detection of one of the actuator units by the control unit 4.

Level 5 autonomous drive will require the control of the vehicle without the need of a driver of the vehicle to take over the control of the vehicle, which can be achieved with the steer-by-wire control system 1 according to the disclosure also in the first fault operational mode M_{F1} and the second fault operational mode M_{F2}. In the decoupled operational mode M_{DO}, the individual steering control on each wheel creates functional benefits, as well as a cost efficient solution through the simple construction of the system. In the decoupled operational mode M_{DO}, the steer-by-wire control system 1 provides an accurate and precise control of the steering, which may lead to decreased tire wear, fuel consumption and wheel friction. Further, in the decoupled operational mode M_{DO}, the steer-by-wire control system may be used to improve vehicle dynamics, such as for example rotations or side movements if applied in a four-wheel steering configuration. It should be understood that the system may be used in any vehicle with a steer-by-wire configuration, and not only for Level 5 autonomous drive systems.

The steer-by-wire control system 1 further comprises a linkage connecting unit 6 arranged for connecting the first steering linkage 5a and second steering linkage 5b. The linkage connecting unit 6 is in the decoupled operational mode M_{DO}, as schematically illustrated in figure 1a, disconnected from the first steering linkage 5a and the second steering linkage 5b. The linkage connection unit 6 is in the decoupled operational mode M_{DO} arranged in the decoupled position P_{D}, allowing the first actuator unit 3a and the second actuator unit 3b to operate independently from each other for controlling the first wheel 2a and the second wheel 2b respectively via the corresponding first and second steering linkages. With the expression disconnected from in the embodiment illustrated in figure 1a is meant that the linkage connection unit 6 is not arranged in engagement with the first steering linkage 5a and the second steering linkage 5b, wherein the linkage connection unit 6 is not impacting the steering functionality of the steer-by-wire control system 1.

In an alternative embodiment not shown in the figures, the linkage connecting unit 6 is in the decoupled operational mode M_{DO}, disconnected from one of the first steering linkage 5a and the second steering linkage 5b. It is thus possible to arrange the linkage connection unit 6 in a position where it is connected to either the first steering linkage 5a or the second steering linkage 5b and disconnected to the other of the second steering linkage 5b or the first steering linkage 5a. Even though the linkage connection unit 6 is connected to one of the steering linkages, the system is allowing the actuator units to operate independently from each other through the disconnection with the other of the steering linkages.

As schematically illustrated in figures 1b and 1c, in the first fault operational mode M_{F1} or the second fault operational mode M_{F2} the linkage connecting unit 6 is connected to the first steering linkage 5a and the second steering linkage 5b. Through the connection of the linkage connection unit 6 with both the first steering linkage 5a and the second steering linkage 5b, the system can be operated with only one of the first actuator unit 3a and the second actuator unit 3b. Thus, when a malfunction of one of the actuator units occurs, the system is operated with only the functioning actuator unit.

If a malfunction of the first actuator unit 3a is detected by the control system 4, the mode of the steer-by-wire control system 1 is changed from the decoupled operational mode M_{DO}, as illustrated in figure 1a, to the first fault operational mode M_{F1}, as illustrated in figure 1b. When changing from the decoupled operational mode M_{DO} to the first fault operational mode M_{F1}, the system is changing the linkage connection unit 6 from the decoupled position P_{D} to the coupled position Pc, where the linkage connection unit 6 is in engagement with the first steering linkage 5a and the second steering linkage 5b. Through the connection between the linkage connection unit 6, the first steering linkage 5a, and the second steering linkage 5b, the second actuator unit 3b is changing the steering positions of both the first wheel 2a and the second wheel 2b, as schematically illustrated with a double arrow in figure 1b.

If a malfunction of the second actuator unit 3b is detected by the control system 4, the mode of the steer-by-wire control system 1 is changed from the decoupled operational mode M_{DO}, as illustrated in figure 1a, to the second fault operational mode M_{F2}, as illustrated in figure 1c. When changing from the decoupled operational mode M_{DO} to the second fault operational mode M_{F2}, the system is changing the linkage connection unit 6 from the decoupled position P_{D} to the coupled position Pc, where the linkage connection unit 6 is in engagement with the first steering linkage 5a and the second steering linkage 5b. Through the connection between the linkage connection unit 6, the first steering linkage 5a, and the second steering linkage 5b, the second actuator unit 3b is changing the steering positions of both the first wheel 2a and the second wheel 2b, as schematically illustrated with a double arrow in figure 1c.

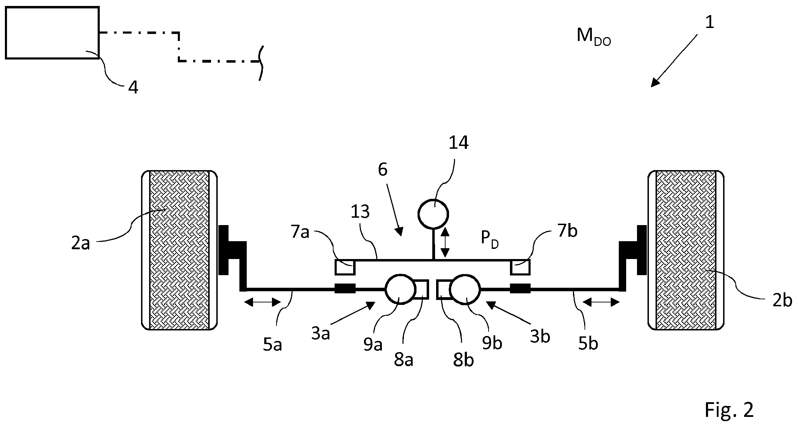

The linkage connecting unit 6 comprises a first connection member 7a and a second connection member 7b, as illustrated in the figures. In the first fault operational mode M_{F1} or the second fault operational mode M_{F2} the first connection member 7a is connecting the linkage connection unit 6 to the first steering linkage 5a and the second connection member 7b is connecting the linkage connection unit 6 to the second steering linkage 5b. The connection members may be of any suitable configuration, such as for example openable mechanical or electromagnetic coupling mechanisms arranged for connecting the linkage connection unit 6 to the respective steering linkages. The connection members may also be arranged as engaging surfaces, where the surfaces are configured to interact with corresponding surfaces on the steering linkages. The surfaces may interact with friction or may be arranged as patterned or grooved surfaces, where the surfaces are arranged to interact and engage in the coupled position. The linkage connection unit 6 may be moved between the decoupled and coupled positions with a suitable actuating mechanism, such as an electric actuator 14 illustrated in figure 2. The electric actuator 14 may be of any suitable type for positioning the linkage connection unit 6 in the different modes as illustrated with a double arrow in figure 2, such as for example a servo motor or a linear actuator. Openable mechanical connection members may for example be actuated between the decoupled and coupled positions with electric or hydraulic actuators. The steering linkages may be provided with connection means for engaging the connection members preventing slipping between coupled components.

The linkage connecting unit 6 further comprises a linkage rod 13, as illustrated in the figures, where the first connection member 7a and the second connection member 7b are attached to the linkage rod 13. The linkage rod 13 may have any suitable shape and be of a rigid construction to engage the steering linkages in the fault operational modes. The linkage rod 13 may for example be made of steel, aluminium or other metallic materials, or from composite materials.

In figure 2, the steer-by-wire control system 1 with actuator units according to a first embodiment is schematically shown. The first actuator unit 3a comprises a first power electronic driver 8a and a first electric motor 9a, and the second actuator unit 3b comprises a second power electronic driver 8b and a second electric motor 9b. The first electric motor 9a is coupled to the first steering linkage 5a with suitable connection means, and the second electric motor 9b is coupled to the second steering linkage 5b with suitable connection means. The electrical motors may be of any suitable types for controlling the steering positions of the respective wheels, such as for example conventional electric motors, servo motors, step motors, and linear electric motors. Other types of electric actuators may also be used if desired. The first power electronic driver 8a is connected to the control unit 4 and the second power electronic driver 8b is connected to the control unit 4. The first electric motor 9a is in electric communication with the first electronic power driver 8a to receive power therefrom and the second electric motor 9b is in electric communication with the second electronic power driver 8b to receive power therefrom. The electronic power driver may be of any suitable configuration.

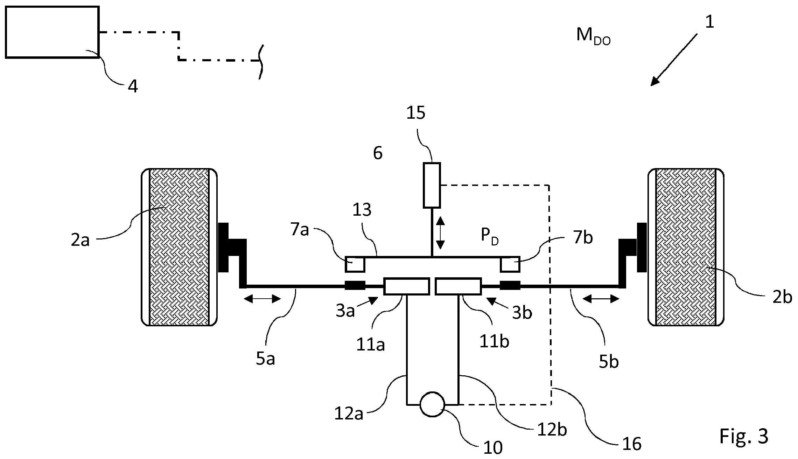

In figure 3, the steer-by-wire control system 1 with actuator units according to a second embodiment is schematically shown. In this embodiment, the system 1 further comprises a hydraulic pump 10. The first actuator unit 3a comprises a first hydraulic actuator 11a and a first hydraulic circuit 12a, and the second actuator unit 3b comprises a second hydraulic actuator 11b and a second hydraulic circuit 12b. The first hydraulic circuit 12a is connecting the hydraulic pump 10 to the first hydraulic actuator 11 a and the second hydraulic circuit 12b is connecting the hydraulic pump 10 to the second hydraulic actuator 11b, as illustrated in figure 3. The hydraulic pump may be of any suitable type or construction and the hydraulic actuators are for example hydraulic cylinders, where the pistons of the cylinders are connected to the respective steering linkages for controlling the steering positions of the wheels. In figure 3, the decoupled operational mode M_{DO} is illustrated and the hydraulic actuators are in this mode configured to control the steering positions of the wheels individually. As described above, in the respective fault operational modes, the non-malfunctioning hydraulic actuator is controlling the positions of both wheels through the connection of the linkage connection unit 6 to the first steering linkage 5a and the second steering linkage 5b. In the first fault operational mode M_{F1}, the second hydraulic actuator 11b is controlling the steering position of the first wheel 2a and the second wheel 2b, and in the second fault operational mode M_{F2}, the first hydraulic actuator 11a is controlling the steering position of the first wheel 2a and the second wheel 2b.

The linkage connecting unit 6 may be arranged as a hydraulic connection unit. In the embodiment illustrated in figure 3, a third hydraulic actuator 15, such as for example a hydraulic cylinder, is arranged for changing the position of the linkage connection unit 6 between the decoupled and coupled positions. The third hydraulic actuator 15 may for example be connected to the hydraulic pump 10 with a third hydraulic circuit 16. In a non-illustrated embodiment, the hydraulic connection unit may instead be constituted by an additional hydraulic cylinder connected to each of the first and second steering linkages, where the additional cylinders are operated by the non-malfunctioning hydraulic actuator in the respective fault operational modes. For example, a first additional hydraulic cylinder can be connected to the first steering linkage 5a and operated by fluid connections from the second hydraulic actuator 11b in the first fault operational mode M_{F1}, and a second additional hydraulic cylinder can be connected to the second steering linkage and operated by fluid connections from the first hydraulic actuator 11a in the second fault operational mode M_{F2}.

As described above, the steer-by-wire control system 1 is configured for controlling the steering angles of the first wheel 2a and the second wheel 2b. In the decoupled operational mode M_{DO}, the steering position of the first wheel 2a is controlled with the first actuator unit 3a independently of the second wheel 2b, and the steering position of the second wheel 2b is controlled with the second actuator unit 3b independently of the first wheel 2a. In a first fault operational mode M_{F1}, where a malfunction of the first actuator unit 3a is detected by the control unit 4, the steering position of the first wheel 2a and the second wheel 2b is controlled with the second actuator unit 3b. In a second fault operational mode M_{F2}, where a malfunction of the second actuator unit 3b is detected by the control unit 4, the steering position of the first wheel 2a and the second wheel 2b is controlled with the first actuator unit 3a. In the decoupled operational mode M_{DO}, the linkage connecting unit 6 is disconnected from the first steering linkage 5a and/or the second steering linkage 5b, and in the first fault operational mode M_{F1} or the second fault operational mode M_{F2}, the linkage connecting unit 6 is connected to the first steering linkage 5a and the second steering linkage 5b.

When an actuator unit malfunction is detected by the control unit 4 during the decoupled operational mode M_{DO}, the system is changing state to the first fault operational mode M_{F1} if the first actuator unit 3a is malfunctioning or to the second fault operational mode M_{F2} if the second actuator unit 3b is malfunctioning. When changing state, the linkage connection unit 6 is moved from the decoupled position PD to the coupled position PC, for example by the electric actuator 14 as illustrated in the embodiment in figure 2 or by the third hydraulic actuator 15 as illustrated in the embodiment in figure 3. When the linkage connection unit 6 is in contact with the steering linkages, the connection members are engaging the steering linkages, wherein the system can be actuated with the non-malfunctioning actuator unit, as described above, until the faulty actuator unit is repaired. When the faulty actuator unit is functioning again, the system is changed back to the decoupled operational mode M_{DO}, where the linkage connection unit 6 is arranged in the decoupled position P_{D}.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of the control unit 4 of the steer-by-wire control system 1, the one or more programs comprising instructions for performing the method according to any one of the above-discussed embodiments. Alternatively, according to another exemplary embodiment a cloud computing system can be configured to perform any of the method aspects presented herein. The cloud computing system may comprise distributed cloud computing resources that jointly perform the method aspects presented herein under control of one or more computer program products. Moreover, the processor may be connected to one or more communication interfaces and/or sensor interfaces for receiving and/transmitting data with external entities such as e.g. sensors arranged on the vehicle surface, an off-site server, or a cloud-based server.

The processors associated with the steer-by-wire control system 1 may be or include any number of hardware components for conducting data or signal processing or for executing computer code stored in memory. The system may have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Steer-by-wire control system
- 2a:: First wheel
- 2b:: Second wheel
- 3a:: First actuator unit
- 3b:: Second actuator unit
- 4:: Control unit
- 5a:: First steering linkage
- 5b:: Second steering linkage
- 6:: Linkage connection unit
- 7a:: First connection member
- 7b:: Second connection member
- 8a:: First electronic power driver
- 8b:: Second electronic power driver
- 9a:: First electric motor
- 9b:: Second electric motor
- 10:: Hydraulic pump
- 11a:: First hydraulic actuator
- 11b:: Second hydraulic actuator
- 12a:: First hydraulic circuit
- 12b:: Second hydraulic circuit
- 13:: Linkage rod
- 14:: Electric actuator
- 15:: Third hydraulic actuator
- 16:: Third hydraulic circuit

## Claims

1. A steer-by-wire control system (1) for vehicles configured for controlling the steering angles of a first wheel (2a) and a second wheel (2b); wherein the system (1) comprises a first actuator unit (3a), a second actuator unit (3b), and a control unit (4) arranged for controlling the first actuator unit (3a) and the second actuator unit (3b); wherein the control unit (4) is arranged for detecting operational modes of the first actuator unit (3a) and the second actuator unit (3b), wherein the first actuator unit (3a) is arranged for controlling the steering position of the first wheel (2a) in a decoupled operational mode (M_{DO}) independently of the second wheel (2b), and wherein the second actuator unit (3b) is arranged for controlling the steering position of the second wheel (2b) in the decoupled operational mode (M_{DO}) independently of the first wheel (2a),
**characterized in that** in a first fault operational mode (M_{F1}) where a malfunction of the first actuator unit (3a) is detected by the control unit (4), the second actuator unit (3b) is arranged for controlling the steering position of the first wheel (2a) and the second wheel (2b); or
in a second fault operational mode (M_{F2}) where a malfunction of the second actuator unit (3b) is detected by the control unit (4), the first actuator unit (3a) is arranged for controlling the steering position of the first wheel (2a) and the second wheel (2b).

2. A steer-by-wire control system (1) according to claim 1,
**characterized in that** the system (1) further comprises a first steering linkage (5a) and a second steering linkage (5b), wherein the first actuator unit (3a) is connected to the first steering linkage (5a) and the second actuator unit (3b) is connected to the second steering linkage (5b), wherein the first steering linkage (5a) is arranged for changing the steering position of the first wheel (2a) and wherein the second steering linkage (5b) is arranged for changing the steering position of the second wheel (2b), wherein in the decoupled operational mode (M_{DO}) the first steering linkage (5a) is decoupled from the second steering linkage (5b).

3. A steer-by-wire control system (1) according to claim 2,
**characterized in that** the system (1) further comprises a linkage connecting unit (6) arranged for connecting the first steering linkage (5a) and second steering linkage (5b), wherein in the decoupled operational mode (M_{DO}) the linkage connecting unit (6) is disconnected from the first steering linkage (5a) and/or the second steering linkage (5b), wherein in the first fault operational mode (M_{F1}) or the second fault operational mode (M_{F2}) the linkage connecting unit (6) is connected to the first steering linkage (5a) and the second steering linkage (5b).

4. A steer-by-wire control system (1) according to claim 3,
**characterized in that** the linkage connecting unit (6) comprises a first connection member (7a) and a second connection member (7b), wherein in the first fault operational mode (M_{F1}) or the second fault operational mode (M_{F2}) the first connection member (7a) is connecting the linkage connection unit (6) to the first steering linkage (5a) and the second connection member (7b) is connecting the linkage connection unit (6) to the second steering linkage (5b).

5. A steer-by-wire control system (1) according to claim 4,
**characterized in that** the linkage connecting unit (6) further comprises a linkage rod (13), wherein the first connection member (7a) and the second connection member (7b) are attached to the linkage rod (13).

6. A steer-by-wire control system (1) according to any of claims 2-4,
**characterized in that** the first actuator unit (3a) comprises a first power electronic driver (8a) and a first electric motor (9a), and wherein the second actuator unit (3b) comprises a second power electronic driver (8b) and a second electric motor (9b), wherein the first electric motor (9a) is coupled to the first steering linkage (5a) and wherein the second electric motor (9b) is coupled to the second steering linkage (5b).

7. A steer-by-wire control system (1) according to claim 6,
**characterized in that** the first power electronic driver (8a) is connected to the control unit (4) and the second power electronic driver (8b) is connected to the control unit (4), wherein the first electric motor (9a) is in electric communication with the first electronic power driver (8a) to receive power therefrom and the second electric motor (9b) is in electric communication with the second electronic power driver (8b) to receive power therefrom.

8. A steer-by-wire control system (1) according to any of claims 2-4,
**characterized in that** the system (1) further comprises a hydraulic pump (10), wherein the first actuator unit (3a) comprises a first hydraulic actuator (11a) and a first hydraulic circuit (12a), wherein the second actuator unit (3b) comprises a second hydraulic actuator (11b) and a second hydraulic circuit (12b), wherein the first hydraulic circuit (12a) is connecting the hydraulic pump (10) to the first hydraulic actuator (11a) and the second hydraulic circuit (12b) is connecting the hydraulic pump (10) to the second hydraulic actuator (11b).

9. A steer-by-wire control system (1) according to claims 3 and 8,
**characterized in that** the linkage connecting unit (6) is a hydraulic connection unit.

10. A vehicle comprising a steer-by-wire control system (1) according to any of claims 1 to 9.

11. A method for controlling a steer-by-wire control system (1) for vehicles, wherein the system (1) is configured for controlling the steering angles of a first wheel (2a) and a second wheel (2b); wherein the system comprises a first actuator unit (3a), a second actuator unit (3b), and a control unit (4) controlling the first actuator unit (3a) and the second actuator unit (3b); wherein the control unit (4) is arranged for detecting operational modes of the first actuator unit (3a) and the second actuator unit (3b), wherein the method comprises the steps;
controlling the steering position of the first wheel (2a) with the first actuator unit (3a) in a decoupled operational mode (M_{DO}) independently of the second wheel (2b), and controlling the steering position of the second wheel (2b) with the second actuator unit (3b) in the decoupled operational mode (M_{DO}) independently of the first wheel (2a);
controlling the steering position of the first wheel (2a) and the second wheel (2b) with the second actuator unit (3b) in a first fault operational mode (M_{F1}), wherein in the first fault operational mode (M_{F1}) a malfunction of the first actuator unit (3a) is detected by the control unit (4); or
controlling the steering position of the first wheel (2a) and the second wheel (2b) with the first actuator unit (3a) in a second fault operational mode (M_{F2}), wherein in the second fault operational mode (M_{F2}) a malfunction of the second actuator unit (3b) is detected by the control unit (4).

12. A method according to claim 11, wherein the system (1) comprises a first steering linkage (5a) and a second steering linkage (5b), wherein the first actuator unit (3a) is connected to a first steering linkage (5a) and the second actuator unit (3b) is connected to a second steering linkage (5b), wherein in the decoupled operational mode (M_{DO}) the first steering linkage (5a) is decoupled from the second steering linkage (5b), wherein the method further comprises the steps;
changing the steering position of the first wheel (2a) with the first steering linkage (5a) and changing the steering position of the second wheel (2b) with the second steering linkage (5b).

13. A method according to claim 12, wherein the method further comprises the step;
controlling the first steering linkage (5a) and the second steering linkage (5b) independently from each other in the decoupled operational mode (M_{DO}).

14. A method according to claim 12 or 13, wherein the system (1) comprises a linkage connecting unit (6), wherein the method further comprises the steps;
disconnecting the linkage connecting unit (6) from the first steering linkage (5a) and/or the second steering linkage (5b) in the decoupled operational mode (M_{DO});
connecting the linkage connecting unit (6) to the first steering linkage (5a) and the second steering linkage (5b) in the first fault operational mode (M_{F1}) or the second fault operational mode (M_{F2}).
